# FASCICULE DE BREVET EUROPEEN

(11) **EP 0 614 428 B1**
(45) Date de publication et mention de la délivrance du brevet: **24.01.1996**
(21) Numéro de dépôt: 93901775.2
(22) Date de dépôt: 26.11.1992
(51) Int. Cl.: B60T 13/567

(54) **SERVOMOTEUR D'ASSISTANCE AU FREINAGE**
BREMSKRAFTVERSTÄRKER
BRAKE SERVO

(30) Priorité: 06.12.1991 FR 9115130
(43) Date de publication de la demande: 14.09.1994
(73) Titulaire: ALLIEDSIGNAL EUROPE SERVICES TECHNIQUES, F-93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR); MEYNIER, Guy, F-93600 Aulnay-sous-Bois (FR); CASTEL, Philippe, F-75005 Paris (FR)
(86) Numéro de dépôt international: FR9201100
(87) Numéro de publication internationale: WO9311011

(56) Documents cités:
- EP-A- 0 331 535
- FR-A- 2 406 551
- FR-A- 2 432 412

## Description

La présente invention concerne les servomoteurs pneumatiques, et plus particulièrement du type de ceux qui sont utilisés pour fournir une assistance au freinage des véhicules automobiles.

Des servomoteurs de ce type comprennent de façon classique une enveloppe à l'intérieure de laquelle se trouve au moins une structure de piston qui, à l'aide d'une membrane déroulante, définit au moins une chambre avant reliée en permanence à une source de dépression et au moins une chambre arrière reliée sélectivement à la chambre avant ou à l'atmosphère par un moyen de valve lors de l'actionnement d'une tige de commande, et un dispositif de fixation du servomoteur sur une paroi adjacente à une première face de l'enveloppe.

Le servomoteur est monté, en règle générale, sur le tablierdu compartiment moteur du véhicule par des vis de montage qui sont fixées sur la partie arrière de l'enveloppe du côté du tablier. Il est donc nécessaire de serrer des écrous sur les vis de montage du côté de la cabine du véhicule. Cette manoeuvre présente des inconvénients pour les constructeurs lors de la fabrication du véhicule, car elle exige l'exécution d'opérations à la fois du côté du compartiment moteur et du côté de la cabine.

On connaît du document EP-A-0 331 535, un servomoteur d'assistance au freinage, conforme au préambule de la revendication principale, et comportant des tubes fixes qui le traversent de façon étanche, d'une face à la face opposée de l'enveloppe de manière à autoriser le montage du servomoteur sur un véhicule en actionnant les dispositifs de fixation à travers ces tubes. L'étanchéité entre les chambres avant et arrière du servomoteur est assurée par une manche de la membrane déroulante, qui épouse de manière étanche la surface extérieure des tubes et se déroule autour d'eux, ou par des joints d'étanchéité montés dans la structure de piston et coulissant autour des tubes.

La présente invention a donc pour but de réaliser un servomoteur d'assistance au freinage, qui permette son montage dans un véhicule en travaillant du seul côté de la paroi où est monté le servomoteur, de façon simple, et sans interférer avec la structure de piston.

Conformément à l'invention, ce résultat est obtenu à l'aide d'un organe d'obturation reçu dans l'ouverture pratiquée dans la structure de piston, solidaire de cette dernière et mobile avec elle.

D'autres buts, caractéristiques et avantages de la présente invention ressortiront de la description qui suit des modes de réalisation donnés à titre d'exemple en référence aux dessins annexés sur lesquels :
- La Figure 1 est une vue en coupe longitudinale d'un servomoteur d'assistance de freinage, réalisé de façon classique sur la moitié supérieure de cette figure et réalisé conformément à un premier mode de réalisation de l'invention sur la moitié inférieure de cette Figure.
- La Figure 2 est une vue analogue à celle de la Figure 1 et illustre sur sa moitié inférieure un second mode de réalisation de l'invention.
- La Figure 3 représente une vue partielle d'une variante de la Figure 2.
- La Figure 4 est une vue en coupe longitudinale d'un servomoteur d'assistance de freinage en tandem, réalisé conformément à un mode de réalisation de l'invention, et
- La Figure 5 est une vue en coupe longitudinale d'un servomoteur d'assistance de freinage à chambre additionnelle, réalisé conformément à un mode de réalisation de l'invention.

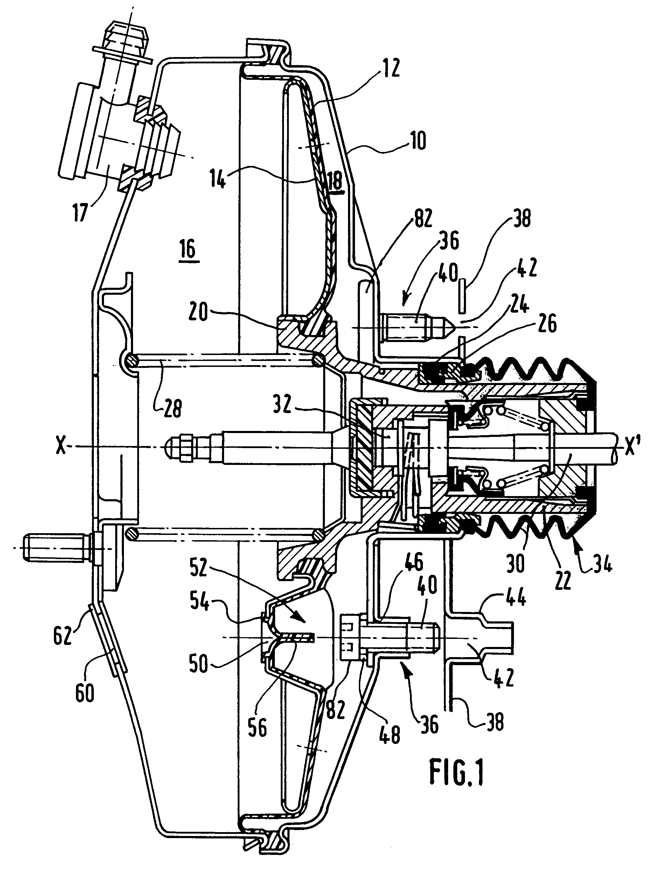

On reconnaît sur la Figure 1 un servomoteur d'assistance au freinage prévu pour être placé, de façon habituelle, entre la pédale de frein d'un véhicule et le maître-cylindre commandant le circuit de freinage hydraulique . Par convention, on appellera "avant" la partie du servomoteur dirigée vers le maître-cylindre et "arrière la partie du servomoteur dirigée vers la pédale de frein.

Le servomoteur comprend une enveloppe extérieure 10 en forme de coquille présentant sensiblement une symétrie de révolution autour d'un axe X - X'. Une membrane souple en élastomère 12, renforcé dans sa partie centrale par un disque métallique 14 encore appelé jupe, définit à l'intérieur de l'espace délimité par l'enveloppe 10 une chambre avant 16 et une chambre arrière 18. La chambre avant 16 est reliée en permanence à une source de dépression par un clapet de retenue de vide 17 disposé dans une ouverture de la paroi avant de l'enveloppe 10. Le bord périphérique extérieur de la membrane 12 est fixé de façon étanche sur l'enveloppe extérieure 10. Le bord périphérique intérieur de cette membrane se termine par un bourrelet reçu de façon étanche dans une gorge annulaire formée sur la surface périphérique extérieure d'un moyeu de piston 20 disposé selon l'axe X - X' du servomoteur . Ce moyeu 20 se prolonge vers l'arrière sous la forme d'une partie tubulaire 22 qui traverse de façon étanche la paroi arrière de l'enveloppe 10. L'étanchéité de cette traversée est assurée par un joint d'étanchéité annulaire armé 24 qui est fixé par une bague 26 dans une partie centrale tubulaire prolongeant vers l'arrière la paroi arrière de l'enveloppe 10.

Un ressort de compression 28 interposé entre la jupe 14 et la paroi avant de l'enveloppe extérieure 10 maintient normalement la jupe 14 dans une position arrière de repos illustrée sur la Figure 1, dans laquelle la chambre arrière 18 occupe son volume minimal et la chambre avant 16 son volume maximal.

De façon connue, la partie tubulaire 22 du moyeu 20 reçoit une tige de commande 30 destinée a être reliée à la pédale de frein (non représentée). L'autre extrémité de la tige 30 comporte un plongeur 32 qui est destiné, lors d'une mise en oeuvre du servomoteur, a actionner un moyen de valve classique 34 qui contrôle de façon connue le passage d'air vers la chambre arrière 18 ou de la chambre arrière 18 vers la chambre avant 16.

Le servomoteur comporte de plus, comme on l'a représenté sur la moitié supérieure de la Figure 1, des dispositifs de fixation 36 sur une paroi 38 du véhicule, comme par exemple le tablier séparant l'habitacle du compartiment moteur.

Les dispositifs de fixation 36 sont classiquement constitués de vis dont la tête 82 est située dans la chambre arrière 18 et dont la tige 40 est sertie, à son extrémité proche de la tête 82, dans l'enveloppe 10. Ainsi, lors du montage sur le véhicule, le servomoteur est présenté sur le tablier par le compartiment moteur pour que les tiges 40 pénètrent dans les ouvertures 42 du tablier, puis, par l'habitacle, un écrou est vissé sur le filetage de la vis 36, avec les difficultés afférentes bien connues pour l'opérateur qui ne peut être à la fois à l'intérieur et à l'extérieur de l'habitacle du véhicule, l'accès à la zone de fixation de l'ensemble, coté habitacle, étant de plus extrêmement malaisé.

La présente invention a précisément pour objet d'obvier à ces inconvénients en proposant un servomoteur facilitant grandement les opérations de montage et de démontage et permettant notamment à l'opérateur de réaliser toutes les opérations de montage, ou de démontage, en demeurant du seul coté de la paroi du véhicule où est installé l'ensemble de freinage.

Pour ce faire, ainsi qu'on l'a représenté sur la moitié inférieure de la Figure 1, l'ouverture 42 dans le tablier 38 est conformée pour pouvoir coopérer avec le filetage d'une vis. Ainsi qu'on l'a représenté, le tablier 38 peut être formé pour présenter autour de l'ouverture 42 une partie tubulaire 44 s'étendant vers l'arrière dans l'habitacle et possédant un taraudage intérieur. En variante, on peut prévoir de solidariser sur le tablier 38 un écrou.

Le dispositif de fixation 36 est constitué d'une vis dont la tête 82 est située dans la chambre arrière 18 et dont la tige 40 traverse une ouverture 46 pratiquée dans la face arrière de l'enveloppe 10. La vis 36 est reçue dans l'ouverture 46 de façon à être libre en rotation dans cette ouverture, mais en est captive c'est à dire qu'elle ne peut en être extraite, à la façon des vis imperdables.

Une ouverture 50 est pratiquée dans la structure de piston, et de plus précisément dans la jupe 14, de façon à ce que cette ouverture 50 soit alignée en direction axiale avec l'ouverture 46 et la vis 36, et un organe d'obturation est disposé dans cette ouverture. Par exemple, à cet endroit de la jupe, la membrane déroulante 12 est formée de façon à former un clapet 52. Dans l'exemple représenté, la membrane 12 comporte une collerette 54 pour ancrer la membrane sur la jupe 14, et, s'étendant à partir de cette collerette 54, une partie tubulaire 56 s'étendant vers l'arrière, et dont les bords arrières restent normalement plaqués l'un sur l'autre. Une telle conception est connue sous le nom de valve en bec de canard. La jupe 15 pourra avantageusement être formée à cet endroit avec un bossage pour faciliter le fonctionnement du clapet 52.

Enfin, une ouverture 60 est pratiquée dans la paroi avant de l'enveloppe 10, de façon à être alignée en direction axiale avec l'ouverture 50 comportant le clapet 52 et l'ouverture 46 contenant la vis 36,

D'après les explications qui précèdent, on aura compris comment le servomoteur peut être installé sur le tablier du véhicule. Le servomoteur est présenté sur le tablier 38 par le compartiment moteur de façon à ce que les tiges 40 des vis 36 s'engagent dans les ouvertures 42 du tablier 38. De par leur conception, elles restent prisonnières des ouvertures 46 de l'enveloppe 10, et viennent buter contre la partie tubulaire 44, ou l'écrou, disposé en arrière de l'ouverture 42. A cet instant, l'opérateur introduit à travers l'ouverture 60 dans la paroi avant du servomoteur un outil de serrage dont la tête pénétrant dans le servomoteur a une forme complémentaire de celle de la tête de la vis 36. Dans l'exemple représenté, la tête 82 de la vis 36 est formée avec un évidement borgne, par exemple en forme de six pans creux. En poursuivant son introduction, la tête de l'outil va rencontrer le clapet 52 et écarter les bords de la partie tubulaire 56 pour arriver à la tête 82 de la vis 36. Il suffit alors à l'opérateur de tourner l'outil pour visser la vis 36 dans la partie 44 du tablier 38, ou dans l'écrou solidaire du tablier. Une fois la vis mise en place et serrée avec le couple de serrage requis, l'opérateur peut retirer l'outil du servomoteur . Au cours de ce retrait, l'outil coulisse le long de la partie tubulaire 56 de la membrane 12 et au fur et à mesure du passage de la tête de l'outil dans cette partie tubulaire, les bords de cette partie se rapprochent et reprennent la position représentée à la Figure 1.

Lorsque l'outil est complètement sorti du servomoteur, l'ouverture 60 dans la paroi avant peut alors être obturée pour rendre le servomoteur opérationnel. On peut prévoir de disposer un bouchon 62 dans cette ouverture, comme on l'a représenté. On peut également prévoir d'obturer l'ouverture 60 à l'aide du clapet de retenue de vide 17 qui sera alors disposé à cet endroit plutôt que dans la position représentée. On peut aussi prévoir que l'obturation de l'ouverture 60 soit effectuée par la bride de montage d'un maître-cylindre (non représenté) sur la face avant du servomoteur. La même opération est répétée avec la ou les autres vis de fixation du servomoteur (en général au nombre de deux) pour parfaire l'installation du servomoteur.

On voit donc bien qu'on a réalisé conformément à l'invention un servomoteur dont toute l'installation est effectuée en travaillant du seul coté de la paroi où est installé le servomoteur. Il s'ensuit donc un montage et un démontage particulièrement faciles du servomoteur, pouvant même être automatisés au moyen de robots industriels.

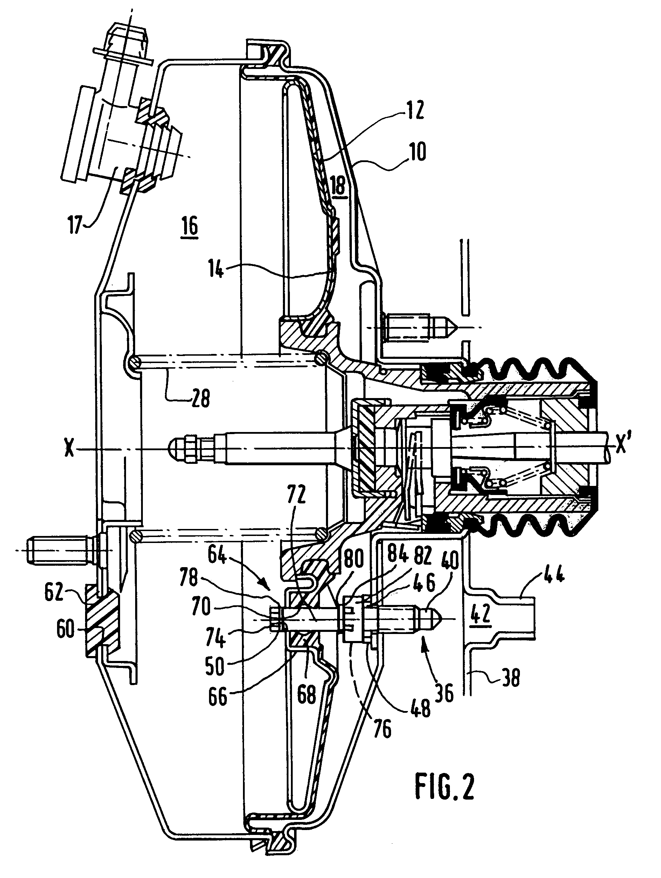

On a représenté sur la Figure 2 un exemple d'un second mode de réalisation de l'invention. Sur cette Figure, les mêmes éléments que ceux de la Figure 1 portent les mêmes numéros de référence. Selon ce mode de réalisation l'ouverture 46 coopérant avec la vis 36 dans la paroi arrière, ainsi que l'ouverture 60 et le bouchon 62 dans la paroi avant sont identiques à ceux du mode de réalisation précédent.

L'ouverture 50 dans la jupe 14 reçoit un organe d'obturation sous la forme d'élément intermédiaire 64.

De façon plus précise, l'ouverture 50 est formée au sommet d'un bossage 66 de la jupe 14 dont la convexité est tournée vers l'avant. La membrane 12 est formée avec un bourrelet 68 épousant la forme concave du bossage 66 et délimitant une ouverture 70 coaxiale à l'ouverture 50. Dans cette ouverture 70 est reçue de façon étanche la partie centrale cylindrique 72 de l'élément intermédiaire 64.

La partie avant 74 de l'élément intermédiaire est située dans la chambre avant 16 du servomoteur et est conformée comme un écrou, par exemple à six pans. La partie arrière 76 de l'élément intermédiaire est située dans la chambre arrière 18 du servomoteur et est également conformée comme un écrou, par exemple à six pans, de forme complémentaire à celle de l'évidement borgne de la tête 82 de la vis 36, par exemple en forme de six pans creux. Entre la partie avant 74 et la partie centrale 72 est formée une gorge 78, et entre la partie centrale 72 et la partie arrière 76 est formé un renflement définissant un épaulement avant 80 et un épaulement arrière 84.

L'installation sur le véhicule du servomoteur selon ce mode de réalisation est tout à fait semblable à celle qui a été précédemment décrite. Une fois le servomoteur prêt, c'est à dire que les tiges 40 des vis 36 sont engagées dans les ouvertures 42 du tablier 38, l'opérateur introduit à travers l'ouverture 60 un outil dont la tête pénétrant dans le servomoteur a une forme complémentaire de celle de la partie avant 74 de l'élément intermédiaire 64. L'outil fait alors reculer l'élément intermédiaire 64 s'il était en position avancée, et la partie arrière 76 de l'élément intermédiaire vient s'engager dans la tête 82 de la vis 36 jusqu'à la venue en butée de l'épaulement 84 sur la tête 82.

L'opérateur n'a plus alors qu'à tourner l'outil pour visser la vis 36, au moyen de l'élément intermédiaire 64, dans la partie tubulaire 44 du tablier 38, ou dans l'écrou solidaire du tablier. Une fois la vis mise en place et serrée avec le couple de serrage requis, l'opérateur peut retirer l'outil du servomoteur. Au début de cette phase de retrait de l'outil, ce dernier, qui comporte des moyens coopérant avec la gorge 78, entraîne avec lui vers l'avant l'élément intermédiaire 64 jusqu'à ce que l'épaulement avant 80 vienne en butée sur le bourrelet 68 de la membrane 12. Les moyens de l'outil qui coopèrent avec la gorge 78 sont alors effacés manuellement ou automatiquement lorsqu'un seuil d'effort de traction est franchi et la tête de l'outil peut alors être dégagée de la partie avant 74 de l'élément intermédiaire 64 et extraite du servomoteur.

Au cours du mouvement de retrait de l'outil, on voit donc que la partie arrière 76 de l'élément intermédiaire 64 a été dégagée de la tête 82 de la vis 36. Ceci a pour but d'éviter que de légers décentrages de l'élément intermédiaire 64, dus aux mouvements de la jupe 14 lors d'actionnement successifs du servomoteur, par rapport à la tête de la vis 36, ne créent des interférences entre ces deux pièces qui perturberaient le retour en position arrière de repos de la structure de piston.

L'ouverture 60 dans la paroi avant de l'enveloppe peut alors être obturée comme précédemment avec un bouchon 62, un clapet de retenue de vide 17 ou la bride de montage d'un maître-cylindre sur le servomoteur.

On voit donc là encore qu'on a réalisé un servomoteur dont toute l'installation est effectuée en travaillant du seul coté de la paroi ou est installé le servomoteur.

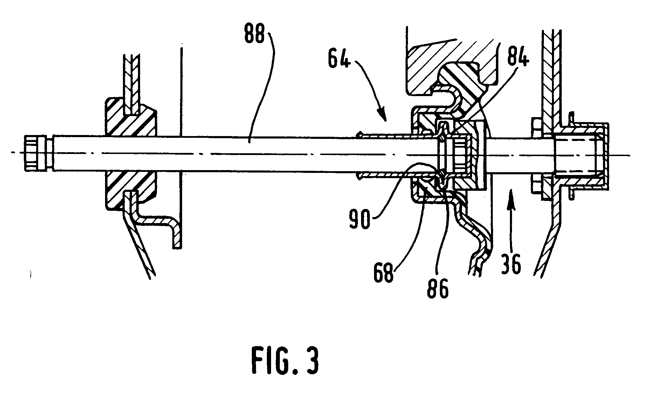

Une variante de la réalisation selon la figure 2 est représentée Figure 3, ou l'on voit que l'élément intermédiaire 64 est constitué d'un tube borgne dont la partie 84 située du coté de la vis 36 est à l'extérieur en forme de 6 pans complémentaire de la forme en 6 pans creux de la tête 82 de la vis 36, et à l'intérieur en forme de 6 pans creux.

Le tube 64 comporte également un repli 86, formant colerette à l'extérieur, et une gorge à l'intérieur. L'outil de serrage 88 comporte lui même à son extrémité pénétrant dans le servomoteur un jonc escamotable 90 et une forme de six pans coopérant avec la forme en six pans creux du fond du tube 64. Cet outil une fois introduit dans le servomoteur a son six pans coopérant avec celui de la vis 36, au travers du tube 64, et son jonc 90 enclippé dans la gorge du repli 86.

Quand le serrage de la vis 36 est accompli, l'outil 88 est retiré, et dans ce mouvement effectue le retrait vers l'avant du tube 64, à l'aide du jonc 90, jusqu'à l'appui de la colerette du repli 86 sur le bourrelet 68. L'outil est ensuite retiré complètement, grâce à l'effacement du jonc 90, et l'ouverture 60 bouchée comme précédemment.

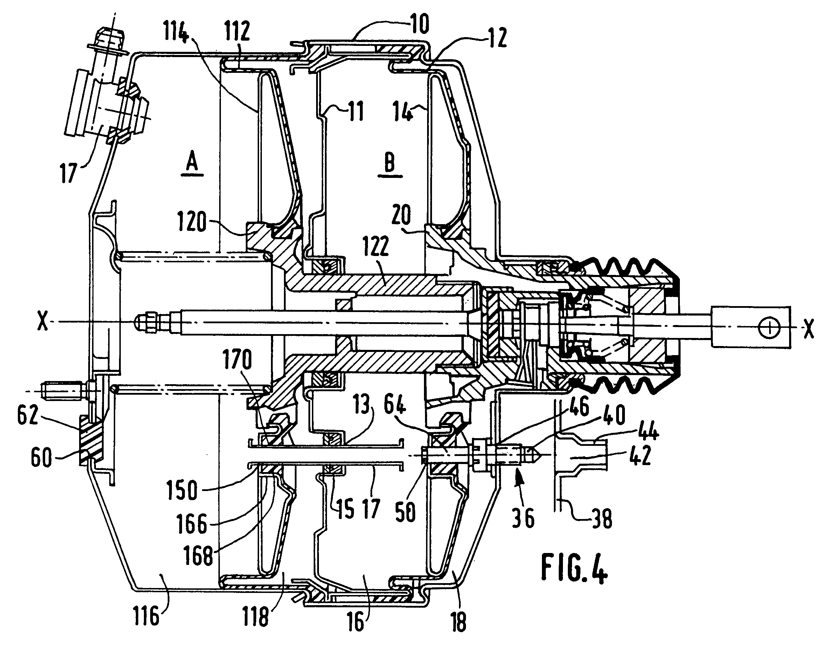

L'invention s'applique également à des servomoteurs pneumatiques doubles ou en tandem, ainsi qu'on l'a représenté sur la Figure 4. Un tel servomoteur comprend de façon classique une enveloppe extérieure 10, dont l'intérieur est divisé par une cloison fixe 11 en un volume avant A et un volume arrière B. Le volume arrière B comporte les mêmes éléments que ceux qui ont été décrits en référence à la Figure 2 et qui portent les mêmes numéros de référence. Le volume avant A comporte des éléments analogues à ceux qui ont été décrits en référence à la Figure 2, et qui portent les mêmes numéros de référence augmentés de 100. Avec ces conventions, on voit que le volume avant A est divisé en une chambre avant 116 et une chambre arrière 118 par une membrane souple 112 renforcée dans sa partie centrale par un disque métallique 114 encore appelé jupe.

La chambre avant 116 est reliée en permanence à une source de dépression par un clapet de retenue de vide 17 disposé dans une ouverture de la paroi avant de l'enveloppe 10. Le bord périphérique extérieur de la membrane 112 est fixé de façon étanche sur l'enveloppe extérieure 10. Le bord périphérique intérieur de cette membrane se termine par un bourrelet reçu de façon étanche dans une gorge annulaire formée sur la surface périphérique extérieure d'un moyeu de piston 120 disposé selon l'axe X - X' du servomoteur.

Ce moyeu 120 se prolonge vers l'arrière sous la forme d'une partie tubulaire 122 qui traverse de façon étanche la cloison fixe 11. La partie tubulaire 122 du moyeu 120 est solidaire, par exemple par vissage, du moyeu 20. Les deux jupes 14 et 114 sont ainsi solidaires, et le ressort de compression 28 interposé entre la jupe 114 et la paroi avant de l'enveloppe extérieure 10 maintient normalement les jupes 14 et 114 dans une position arrière de repos illustrée sur la Figure 4, dans laquelle les chambres arrières 18 et 118 occupent leur volume minimal et les chambres avants 16 et 116 leur volume maximal.

Comme dans les modes de réalisation précédemment décrits, le tablier 38 est conformé pour pouvoir coopérer avec le filetage d'une vis 36 captive dans l'ouverture 46 pratiquée dans la face arrière de l'enveloppe 10. La jupe 14 est formée avec l'ouverture 50 obturée par l'élément intermédiaire 64.

De la même façon, la jupe 114 est formée avec un bossage 166 dont la convexité est tournée vers l'avant, et au sommet duquel est formée une ouverture 150. La membrane 112 est formée avec un bourrelet 168 épousant la forme concave du bossage 166 et délimitant une ouverture 170 coaxiale aux ouvertures 50 et 150.

La cloison fixe 11 est formée avec une ouverture 13 coaxiale aux ouvertures 50 et 150 et munie d'un joint d'étanchéité 15. Un tube 17 coulisse de façon étanche dans les ouvertures 150 et 13, et possède une longueur légèrement supérieure à la course maximale des jupes 14 et 114.

L'installation du servomoteur de la Figure 4 sur le véhicule apparaît clairement de la description qui précède. Une fois le servomoteur prêt, c'est-à-dire que les tiges des vis 36 sont engagées dans les ouvertures 42 du tablier 38, l'opérateur introduit à travers l'ouverture 60 un outil dont la tête pénétrant dans le servomoteur a une forme complémentaire de celle de la partie avant de l'élément intermédiaire 64. L'outil traverse le tube 17 et vient s'engager dans la tête de la vis 36, qu'il suffit alors de visser.

L'opérateur peut retirer l'outil comme précédemment et obturer l'ouverture 60.

On pourra avantageusement rabattre les bords avant et arrière du tube 17 pour assurer que ce dernier ne perde le contact avec les ouvertures 13 et 150. Bien entendu, on peut utiliser un clapet 52 ou un tube borgne à la place de l'élément intermédiaire 64. Un avantage supplémentaire de ce mode de réalisation réside dans le fait que, une fois le servomoteur tandem installé sur le véhicule, le tube 17 assure la communication entre les chambres avant 16 et 116 des volumes avant et arrière A et B.

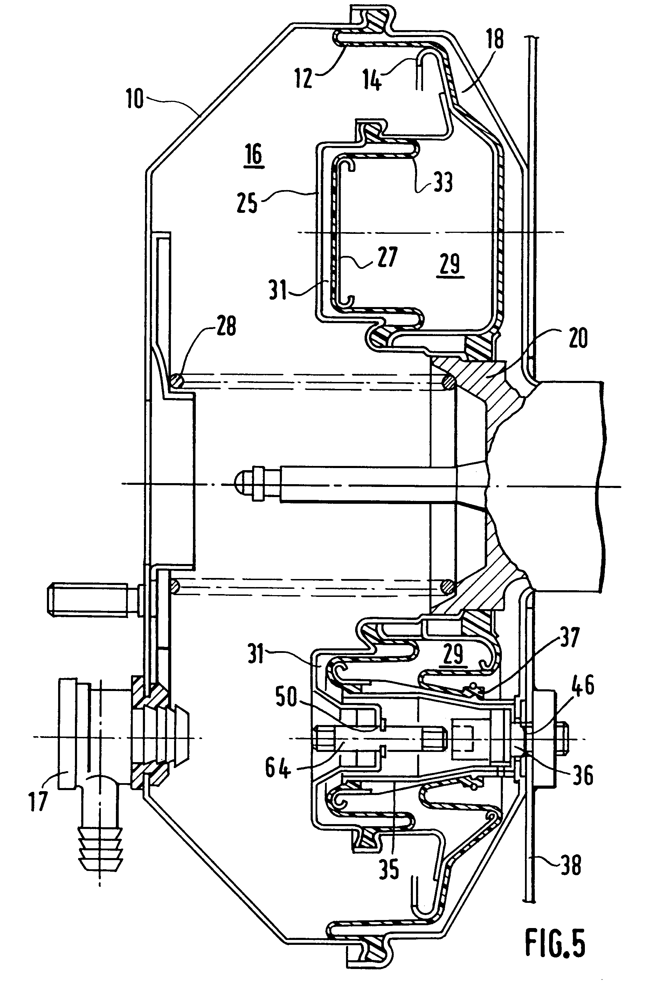

L'invention peut également être appliquée à des servomoteurs à chambre additionnelle, par exemple du type décrit dans le document US-A-5 044 255, auquel on pourra se reporter, et représenté à la Figure 5.

Selon ce type de servomoteur, un boîtier annulaire auxiliaire 25 est fixé à la jupe 14 et fait saillie dans la chambre avant 16.

Un piston annulaire 27 divise intérieurement ce boîtier auxiliaire 25 en deux chambres 29 et 31 de façon étanche grâce à une membrane auxiliaire 33. Le piston annulaire 27 est monté fixe par rapport à l'enveloppe 10. De façon plus précise pour la mise en oeuvre de la présente invention, le piston annulaire 27 est formé avec un prolongement de forme générale cylindrique 35 s'étendant vers l'arrière, fixé à la paroi arrière de l'enveloppe 10, autour de l'ouverture 46 recevant la vis 36. La membrane déroulante 12 est formée avec une ouverture dont la périphérie 37 est fixée de façon étanche autour du prolongement cylindrique 35, pour assurer l'étanchéité entre la chambre arrière 18 et la chambre 29 du boîtier 25.

Coaxialement au prolongement cylindrique 35, la jupe 14 est formée avec une ouverture 50 recevant, comme on l'a représenté, un élément intermédiaire 64, un clapet 52 ou un tube borgne comme dans les modes de réalisation précédents. Le montage du servomoteur à chambre additionnelle peut ainsi être effectué comme on l'a déjà expliqué précédemment.

Bien entendu l'invention n'est pas limitée aux modes de réalisation qui ont été décrits à titre d'exemple, mais est susceptible de recevoir de nombreuses variantes qui apparaîtront à l'homme du métier. C'est ainsi par exemple que, pour certaines applications où l'on désire que le servomoteur soit installé dans l'habitacle du véhicule, l'invention s'applique en disposant le dispositif de fixation sur la paroi avant du servomoteur et l'ouverture 60 sur la paroi arrière du servomoteur. Dans ces cas, le mode de réalisation de la Figure 2 sera préféré et l'installation sera effectuée en ayant complètement comprimé le ressort de compression 28 pour que la structure de piston occupe sa position extrême en avant. D'autre part, l'outil de serrage 88 pourra être pré-installé dans le servomoteur, ainsi qu'on l'a représenté sur la Figure 3, de sorte que, lors de l'installation du servomoteur sur le véhicule, l'opérateur n'aura qu'à manoeuvrer l'outil de serrage en rotation et à le retirer une fois le serrage effectué. Cette disposition évite ainsi à l'opérateur l'introduction de l'outil dans le servomoteur la recherche de l'alignement et le positionnement précis de l'outil de serrage par rapport à l'élément intermédiaire 64.De même, le clapet du mode de réalisation de la Figure 1 pourra être réalisé à l'aide d'un insert rigide noyé dans la membrane de façon à former un obturateur basculant, venant normalement boucher l'ouverture pratiquée dans la jupe de par l'élasticité du matériau constituant la membrane, et s'ouvrant par rotation autour d'un de ses cotés sous l'effet de la sollicitation extérieure provoquée par l'introduction de l'outil de serrage dans le servomoteur.

## Revendications

1. Servomoteur d'assistance au freinage comportant une enveloppe (10) à l'intérieur de laquelle se trouve au moins une structure de piston qui, à l'aide d'une membrane déroulante (12), définit au moins une chambre avant (16) reliée en permanence à une source de dépression par un clapet (17) et au moins une chambre arrière (18) reliée sélectivement à la chambre avant (16) ou à l'atmosphère par un moyen de valve (34) lors de l'actionnement d'une tige de commande (30), et au moins un dispositif de fixation (36) du servomoteur sur une paroi (38) adjacente à une première face de l'enveloppe (10), des ouvertures (50,60) étant pratiquées dans la structure de piston (14) et dans une seconde face de l'enveloppe (10) et alignées en direction axiale du servomoteur pour permettre l'actionnement du dispositif de fixation (36) par l'ouverture (60) pratiquée dans la seconde face de l'enveloppe (10), caractérisé en ce que l'ouverture (50) pratiquée dans la structure de piston (14) reçoit un organe d'obturation (52, 64), solidaire de la structure de piston et mobile avec elle.

2. Servomoteur selon la revendication 1, caractérisé en ce que le dispositif de fixation (36) est constitué par une vis (36) reçue dans une ouverture (46) de la première face de l'enveloppe (10) de façon à être libre en rotation dans cette ouverture (46) et à être captive de cette ouverture (46).

3. Servomoteur selon la revendication 2, caractérisé en ce que la vis (36) comporte une tête ayant une forme complémentaire de celle d'un outil de serrage.

4. Servomoteur selon la revendication 3, caractérisé en ce que l'organe d'obturation est un clapet (52).

5. Servomoteur selon la revendication 4, caractérisé en ce que le clapet (52) est formé par une partie tubulaire (56) de la membrane déroulante (12) dont les bords éloignés de la structure de piston (14) restent normalement plaqués l'un sur l'autre.

6. Servomoteur selon la revendication 3, caractérisé en ce que l'organe d'obturation est un élément intermédiaire (64) reçu de façon étanche dans une ouverture (70) de la structure de piston (14).

7. Servomoteur selon la revendication 6, caractérisé en ce que l'élément intermédiaire (64) comporte une première partie d'extrémité (74) ayant une forme complémentaire de celle de la tête d'un outil de serrage et une seconde partie d'extrémité (76) ayant une forme complémentaire de celle de la tête (82) et de la vis (36).

8. Servomoteur selon la revendication 6, caractérisé en ce que l'élément intermédiaire (64) est constitué d'un tube borgne dont la partie (84) située du coté de la vis (36) a une forme complémentaire de la forme de la tête (82) de la vis (36)

9. Servomoteur selon la revendication 8, caractérisé en ce le tube (64) comporte un repli (86) formant colerette extérieure et gorge intérieure.

10. Servomoteur selon la revendication 9, caractérisé en ce qu'un jonc (90) est monté élastiquement sur l'outil de serrage (88) et est reçu dans la gorge intérieure du tube (64).

11. Servomoteur selon la revendication 1, caractérisé en ce qu'un boîtier auxiliaire (25) est solidaire de la structure de piston (14) et fait saillie dans la chambre avant (16), un piston auxiliaire (27) divisant intérieurement de manière étanche le boîtier auxiliaire (25) en deux chambres (29, 31) grâce à une membrane auxiliaire (33), le piston auxiliaire (27) étant monté fixe par rapport à l'enveloppe (10) au moyen d'au moins un prolongement cylindrique (35) s'étendant vers l'arrière et fixé à l'enveloppe (10) autour du moyen de fixation (36), le prolongement cylindrique (35) étant coaxial à l'ouverture (50) pratiquée dans la structure de piston (14).

12. Servomoteur selon la revendication 1, comportant de plus une cloison fixe (1) délimitant à l'intérieur de l'enveloppe (10) un volume avant (A) et un volume arrière (B), le volume avant étant divisé de façon étanche en une chambre avant (116) et une chambre arrière (118) par une deuxième structure de piston (114) solidaire de la structure de piston (14) du volume arrière (B) au moyen d'une partie tubulaire (122) qui traverse de façon étanche la cloison fixe (11), caractérisé en ce que des ouvertures (13, 150) sont pratiquées dans la cloison fixe (11) et dans la deuxième structure de piston (114), alignées en direction axiale du servomoteur avec les ouvertures (50, 60) pratiquées dans la structure de piston (14) du volume arrière (B) et dans la seconde face de l'enveloppe (10), et reçoivent à coulissement étanche un tube (17).

13. Servomoteur selon une quelconque des revendications précédentes, caractérisé en ce que l'ouverture (60) pratiquée dans la seconde face de l'enveloppe (10) est obturée par un bouchon (62).

14. Servomoteur selon une des revendications de 1 à 12, caractérisé en ce que l'ouverture (60) pratiquée dans la seconde face de l'enveloppe (10) est obturée par le clapet (17).

## Claims

1. Brake-booster comprising a casing (10) within which is found at least one piston structure which, with the help of an unrolling membrane (12), defines at least one front chamber (16) permanently connected to a partial vacuum source via a valve (17) and at least one back chamber (18) connected selectively to the front chamber (16) or to the atmosphere via a valve means (34) when a control rod (30) is actuated, and a device (36) for fastening the booster on a wall (38) adjacent to a first face of the casing (10), apertures (50, 60) being made in the piston structure (14) and in a second face of the casing (10) and aligned in the axial direction of the booster so as to permit the actuation of the fastening device (36) through the aperture (60) made in the second face of the casing (10), characterized in that the aperture (50) made in the piston structure (14) receives a closing member (52, 64), integral with the piston structure and movable with it.

2. Booster according to Claim 1, characterized in that the fastening device (36) is constituted by a screw (36) received in an aperture (46) of the first face of the casing (10) so as to be free in rotation in this aperture (46) and to be imprisoned by this aperture (46).

3. Booster according to Claim 2, characterized in that the screw (36) comprises a head having a shape complementary to that of a tightening tool.

4. Booster according to Claim 3, characterized in that the closing member is a valve (52).

5. Booster according to Claim 4, characterized in that the valve (52) is formed by a tubular part (56) of the unrolling membrane (12) whose edges remote from the piston structure (14) normally remain flattened against one another.

6. Booster according to Claim 3, characterized in that the closing member is an intermediate member (64) received in leaktight manner in an aperture (70) of the piston structure (14).

7. Booster according to Claim 6, characterized in that the intermediate member (64) comprises a first end part (74) having a shape complementary to that of the head of a tightening tool and a second end part (76) having a shape complementary to that of the head (82) and of the screw (36).

8. Booster according to Claim 6, characterized in that the intermediate member (64) is constituted by a blind tube the part (84) of which situated in the direction of the screw (36) has a shape complementary to the shape of the head (82) of the screw (36)

9. Booster according to Claim 8, characterized in that the tube (64) comprises a fold (86) forming an outer flange and an inner groove.

10. Booster according to Claim 9, characterized in that a retaining ring (90) is resiliently mounted on the tightening tool (88) and is received in the inner groove of the tube (64).

11. Booster according to Claim 1, characterized in that an auxiliary housing (25) is secured to the piston structure (14) and projects into the front chamber (16), an auxiliary piston (27) internally dividing the auxiliary housing (25) in leaktight manner into two chambers (29, 31) by virtue of an auxiliary membrane (33), the auxiliary piston (27) being mounted fixed with respect to the casing (10) by means of at least one cylindrical extension (35) extending backward and fastened to the casing (10) around the fastening means (36), the cylindrical extension (35) being coaxial with the aperture (50) made in the piston structure (14).

12. Booster according to Claim 1, additionally comprising a fixed partition (1) delimiting, inside the casing (10), a front volume (A) and a back volume (B), the front volume being divided in leaktight manner into a front chamber (116) and a back chamber (118) by a second piston structure (114) secured to the piston structure (14) of the back volume (B) by means of a tubular part (122) which traverses, in leaktight manner, the fixed partition (11), characterized in that apertures (13, 150) are made in the fixed partition (11) and in the second piston structure (114), aligned in the axial direction of the booster with the apertures (50, 60) made in the piston structure (14) of the back volume (B) and in the second face of the casing (10) and receiving a tube (17) with leaktight sliding.

13. Booster according to any of the preceding claims, characterized in that the aperture (60) made in the second face of the casing (10) is closed off by a plug (62).

14. Booster according to any of Claims 1 to 12, characterized in that the aperture (60) made in the second face of the casing (10) is closed off by the valve (17).

## Patentansprüche

1. Bremsunterstützungs-Servomotor mit einem Gehäuse (10), in dessen Inneren sich wenigstens ein Kolbenaufbau befindet, der mit Hilfe einer Abrollmembran (12) wenigstens eine vordere Kammer (16), die über ein Ventil (17) permanent mit einer Unterdruckquelle verbunden ist, und wenigstens eine hintere Kammer (18) abgrenzt, die selektiv bei der Betätigung einer Steuerstange (30) über ein Ventilmittel (34) mit der vorderen Kammer (16) oder mit der Atmosphäre verbunden ist, und mit wenigstens einer Befestigungsvorrichtung (36) zum Befestigen des Servomotors an einer Wand (38), die an eine erste Seite des Gehäuses (10) angrenzt, wobei in dem Kolbenaufbau (14) und in einer Zweiten Seite des Gehäuses (10) Öffnungen (50, 60) ausgebildet sind, die in axialer Richtung des Servomotors ausgerichtet sind, um die Betätigung der Befestigungsvorrichtung (36) durch die in der Zweiten Seite des Gehäuses (10) ausgebildete Öffnung (60) zu ermöglichen, dadurch gekennzeichnet, daß die in dem Kolbenaufbau (14) ausgebildete Öffnung (50) ein Verschlußorgan (52, 64) aufnimmt, welches fest mit dem Kolbenaufbau verbunden und mit diesem bewegbar ist.

2. Servomotor nach Anspruch 1, dadurch gekennzeichnet, daß die Befestigungsvorrichtung (36) durch eine Schraube (36) gebildet ist, die in einer Öffnung (46) der ersten Seite des Gehäuses (10) so aufgenommen ist, daß sie in dieser Öffnung (46) frei drehbar und von dieser Öffnung (46) festgehalten ist.

3. Servomotor nach Anspruch 2, dadurch gekennzeichnet, daß die Schraube (36) einen Kopf umfaßt, der eine zu der Form eines Spannwerkzeuges komplementäre Form aufweist.

4. Servomotor nach Anspruch 3, dadurch gekennzeichnet, daß das Verschlußorgan ein Ventil (52) ist.

5. Servomotor nach Anspruch 4, dadurch gekennzeichnet, daß das Ventil (52) durch einen rohrförmigen Abschnitt (56) der Abrollmembran (12) gebildet ist, wobei die verlängerten Ränder des Kolbenaufbaus (14) normalerweise aneinander anliegend verbleiben.

6. Servomotor nach Anspruch 3, dadurch gekennzeichnet, daß das Verschlußorgan ein Zwischenelement (64) ist, welches in dichter Weise in einer Öffnung (70) des Kolbenaufbaus (14) aufgenommen ist.

7. Servomotor nach Anspruch 6, dadurch gekennzeichnet, daß das Zwischenelement (64) einen ersten Endabschnitt (74) aufweist, dessen Form komplementär zu derjenigen des Kopfes eines Spannwerkzeuges ist, und einen zweiten Endabschnitt (76), dessen Form komplementär zu derjenigen des Kopfes (82) und der Schraube (36) ist.

8. Servomotor nach Anspruch 6, dadurch gekennzeichnet, daß das Zwischenelement (64) durch ein einseitig verschlossenes Rohr gebildet ist, dessen auf der Seite der Schraube (36) angeordneter Abschnitt (84) eine Form aufweist, die komplementär zu der Form des Kopfes (82) der Schraube (36) ist.

9. Servomotor nach Anspruch 8, dadurch gekennzeichnet, daß das Rohr (64) eine Aufbiegung (86) umfaßt, welche einen äußeren Kragen und eine innere Nut bildet.

10. Servomotor nach Anspruch 9, dadurch gekennzeichnet, daß an dem Spannwerkzeug (88) elastisch ein Sicherungsring (90) angebracht ist, der in der inneren Nut des Rohres (64) aufgenommen ist.

11. Servomotor nach Anspruch 1, dadurch gekennzeichnet, daß mit dem Kolbenaufbau (14) ein Hilfsgehäuse (25) fest verbunden ist, das in die vordere Kammer (16) hineinragt, wobei ein Hilfskolben (27) das Innere des Hilfsgehäuses (25) mittels einer Hilfsmembran (33) in dichter Weise in zwei Kammern (29, 31) unterteilt, wobei der Hilfskolben (27) bezüglich des Gehäuses (10) mittels wenigstens einer zylindrischen Verlängerung (35) feststehend angebracht ist, die sich nach hinten erstreckt und an dem Gehäuse (10) um die Befestigungsvorrichtung (36) herum befestigt ist, wobei die zylindrische Verlängerung (35) koaxial zur Öffnung (50) ist, die in dem Kolbenaufbau (14) ausgebildet ist.

12. Servomotor nach Anspruch 1, enthaltend außerdem eine feste Trennwand (1), die im Inneren des Gehäuses (10) ein vorderes Volumen (A) und ein hinteres Volumen (B) abgrenzt, wobei das vordere Volumen in dichter Weise in eine vordere Kammer (116) und eine hintere Kammer (118) mittels eines zweiten Kolbenaufbaus (114) unterteilt ist, der fest mit dem Kolbenaufbau (14) des hinteren Volumens (B) mittels eines rohrförmigen Abschnittes (122) verbunden ist, der in dichter Weise die feste Trennwand (11) durchquert, dadurch gekennzeichnet, daß in der festen Trennwand (11) und in dem zweiten Kolbenaufbau (114) Öffnungen (13, 150) ausgebildet sind, die in axialer Richtung des Servomotors mit den Öffnungen (50, 60) ausgerichtet sind, die in dem Kolbenaufbau (14) des hinteren Volumens (B) und in der zweiten Seite des Gehäuses (10) ausgebildet sind, und die in dichter Weise verschiebbar ein Rohr (17) aufnehmen.

13. Servomotor nach einem der vorhergehenden Ansprüche, dadurch gekennzeichnet, daß die in der zweiten Seite des Gehäuses (10) ausgebildete Öffnung (60) durch einen Stopfen (62) verschlossen ist.

14. Servomotor nach einem der Ansprüche 1 bis 12, dadurch gekennzeichnet, daß die in der Zweiten Seite des Gehäuses (10) ausgebildete Öffnung (60) durch ein Ventil (17) Verschlossen ist.
